# EUROPEAN PATENT APPLICATION

(11) **EP 4 155 193 A1**
(43) Date of publication of application: **29.03.2023**
(21) Application number: 21198669.0
(22) Date of filing: 23.09.2021
(51) Int. Cl.: B64C 11/00, F01D 9/06, F01D 25/12, F01D 25/16, F02C 7/12, B64D 27/24, B64D 33/08, B64C 29/00

(54) **DUCTED FAN ENGINE, ARRAY OF DUCTED FAN ENGINES, AND AIRCRAFT**

(71) Applicant: Lilium eAircraft GmbH, 82234 Wessling (DE)
(72) Inventor: Vermeiren, Sébastien, 80997 Munich (DE); Wiegand, Daniel, 82234 Weßling (DE)
(74) Representative: Schmidt, Steffen

(57) **Abstract**

In a Ducted fan engine (1), configured for providing thrust for an aircraft (100), in particular an aircraft (100) having vertical takeoff and landing capability, comprising a fan stator (3) having one or more substantially radially extending vanes (31); a shroud (11) circumferentially surrounding the fan stator (3); a fan rotor (5) rotatably supported by the fan stator (3); at least one electromotor (2) configured for driving the fan rotor (5), wherein in particular the electromotor is arranged within the fan stator (3); it is provided that at least one heat pipe (4) configured for dissipating heat from the electromotor (2) is arranged in at least one vane (31).

## Description

### Field

The invention relates to a ducted fan engine for providing thrust to propel an aircraft, and to an array comprising several ducted fan engines. Furthermore, the invention relates to an aircraft, in particular an aircraft capable of vertical take-off and landing (VTOL), comprising such a ducted fan engine or array. The invention also relates to a method for cooling an electromotor driving a ducted fan engine of an aircraft.

### Related Art

Aircraft capable of vertical take-off and landing (VTOL) have the potential to incorporate both the advantages of helicopters, namely starting and landing using the limited space and/or in rough terrain, as well as the advantages of conventional aircraft, such as high traveling velocities and cruising efficiently, with one another. Challenges in the design of VTOL aircraft include the necessity that, on the one hand, large propeller areas are required for the provision of a sufficient mass flow to create thrust into the vertical direction for takeoff or landing, and at the same time limit the energy consumption. On the other hand, propellers must be configured for the least amount of aerodynamic resistance for cruising, when the lift is dynamically created by means of suitable wing profiles. The reduction of energy consumption is particularly relevant in the case of electrically powered VTOL aircraft (eVTOL) such as the eVTOL aircraft described in Lilium^{®}'s patent applications US 2016/0023754 A1 or US 2016/0311522 A1.

US 2016/0023754 A1 describes an eVTOL aircraft with multiple electrically powered ducted fan engines, each of which comprise a shroud containing a stator with at least one stator vane or guiding vane and a rotor with several rotor blades. An electromotor with electromagnetic coils is attached to the rotor. Rotor blades are formed in such a way that they deflect part of the air sucked in by the rotor towards the coils in such a way that the coils are cooled by the resulting airflow. This improved cooling of the coils makes a higher power of the ducted propeller possible, since for example a high provided rotational speed of the rotor requires a high switching frequency of the coils, which in turn leads to increased heat losses in the coils and in particular the cores, for example made of iron, of the coils, which losses have to be dissipated suitably so as to prevent damage to the coils. The stator shaft or shroud is provided with air ducts to guide cooling air to the coils. However, guiding air into contact with the electromotor may be detrimental, as the air may carry corrosive particles or mechanically hazardous objects to the electromotor. Furthermore, the tight space constraints in the area of the electromotor render it difficult to provide a large heat transfer area for dissipating heat from the electromotor into the air acting as a heat sink.

### Description

It is an object of the invention to overcome the disadvantages of the prior art, in particular to provide a safe and/or energy efficient cooling for an electrically driven aircraft propulsion engine and corresponding aircraft, particularly a VTOL, more particularly an eVTOL. This objective is solved by the subject matter of the independent claims.

Accordingly, a ducted fan engine is configured for providing thrust for an aircraft, in particular an aircraft having vertical takeoff and landing capability, such as an eVTOL aircraft. The ducted fan engine comprises a fan stator, a shroud, a fan rotor and at least one electromotor configured for driving the fan rotor. The ducted fan engine defines a rotary axis around which the rotor rotates. It may be preferred that the shroud, the stator and the rotor share a common coaxial orientation with regard to the rotary axis.

The fan stator has one or more substantially radially extending vanes. In particular, the ducted fan engine may have at least 4, in particular at least 8 vanes, and/or no more than 30 vanes, in particular no more than 20 vanes. Several stator vanes may be arranged on the outside of the stator housing in rotationally symmetrical manner and/or in equal circumferential distances to one another. In one embodiment, the ducted fan engine has 12, preferably identical, stator vanes. Preferably, the at least one stator vane extends radially between an inner surface of the shroud and an outer surface of a stator housing. The shroud circumferentially surrounds the fan stator. The fan rotor is rotatably supported by the fan stator. In particular, the fan rotor includes a hub coaxial with regard to a rotary axis of the ducted fan engine, wherein the rotor blades extend radially outward from the hub. The airfoil of the rotor blades extends approximately parallel to the rotary axis in the proximity of the rotor hub.

It may be preferred that the electromotor is encased within the stator housing and/or within the rotor hub. The at least one electromotor for driving the fan rotor is preferably arranged within the fan stator. The at least one electromotor may have an output shaft directly coupled to the rotor or may be provided with a transmission coupling an output shaft of the electromotor to the rotor. The arrangement of an electromotor in the proximity of the rotor allows to minimize drag impact of the motor onto the aircraft, thus allowing for increased overall aircraft operation efficiency. The electromotor may include an electromagnetic stator attached to the fan stator. The electromotor may include an electromagnetic rotor coupled to the fan rotor, in particular directly to a shaft onto which the rotor blades are mounted or indirectly via a transmission, such as a planetary gear. The ducted fan engine according to the invention is electrically driven. It shall be clear that the ducted fan engine according to the invention may be free of a combustion chamber, free of a (multistage) compressor, in particular a compressor for compressing environmental air to be supplied to the combustion chamber, and/or free of a (multistage) turbine, in particular a turbine driving the compressor. It may be preferred that the ducted fan engine comprises no more than one fan rotor and/or no more than one fan stator.

According to the invention, the ducted fan engine is provided with at least one heat pipe configured for dissipating heat from the electromotor is arranged in at least one vane. The at least one vane may comprise or consist of a thermally conductive material, in particular a thermally conductive metal material, such as copper and/or aluminum. It maybe preferred that the ducted fan engine comprises a multitude of heat pipes arranged in several vanes. The ducted fan engine may in particular comprise several vanes, each of which holding at least one heat pipe, or multiple heat pipes, such as a set of three, four or five heat pipes, arranged therein. In the ducted fan engine according to the invention, the at least one vane or several vanes provide a large heat exchange area for dissipating heat from the electromotor to the air flowing through the ducted fan engine, thereby providing a very efficient heat transfer to the air acting as a heat sink. By using at least one heat pipe, in particular at least one heat pipe per stator vane, heat from the electromotor may be distributed largely, preferably homogenously, along the radial extension of the stator vane(s), in particular so as to avoid a large temperature gradient in the radial direction of the stator vane. The heat pipe preferably contains a mix of a working fluid and preferably its vapor configured for a thermal cycle. The working fluid is preferably a phase change material. The heat pipe is preferably configured to allow a circulation of the working fluid inside of the heat pipe from the electromotor acting as heat source to the stator vanes, and back. The thermal cycle of the heat pipe may preferably include evaporation in the are of the electromotor, condensation in the area of the stator vane, transportation of vapor and possibly working fluid from the electromotor to the stator vane, and/or transportation of working fluid and possibly vapor from the stator vane to the electromotor.

By using one or more heat pipes for transferring heat from the electromotor into the stator vanes, a direct collision of air and airborne particles with the coils of the electromotor can advantageously be avoided. Reliability and lifetime of the ducted fan engine and particularly its electromotor may be significantly increased. Simultaneously, the use of at least on heat pipe to dissipate heat from the electromotor through the aerofoil surface of the at least one stator vane allows for very efficient cooling. The overall efficiency of the electrical vertical take off and landing aircraft may thereby be significantly increased. The eVTOL aircraft may thereby be enabled to remain substantially longer in a vertical take off or hover state. Alternatively or additionally, the eVTOL aircraft may be provided with an increased travel range and/or enabled to carry more payload.

In a preferred embodiment of a ducted fan engine which may be combined with the abovementioned ones, the at least one heat pipe, preferably at least one heat pipe per vane or per set of heat pipes per vane, extends into the electromagnetic stator. By at least partially inserting the heat pipe, preferably the radially inner end thereof, into the electromagnetic stator, heat may be received by the heat pipe directly from the heat source in form of the electromotor, particularly the electromagnetic stator. Thereby, a particularly advantageous synergistic effect is achieved in which the heat pipe may be used to cool the electromotor in one or more hot spots and to evenly distribute the heat through the stator vane. In particular, at least one heat pipe or at least one set of heat pipes is provided per stator vane and/or electromagnetic coil. The heat pipe or heat pipes extend in a radial direction into at least part of the electromagnetic coil, preferably through at least half of the radial extension of the electromagnetic coil with respect to the rotary axis of the ducted fan engine, more preferably through at least 90% of radial extension of the electromagnetic coil with respect to the rotary axis of the ducted fan engine or through the entire radial extension thereof. Each electromagnetic coil may be associated with a set comprising one or more protruding heat pipes extending into the coil. Each set may optionally comprise one or more engaging heat pipes which extend less far inwards in the radial direction than the protruding heat pipe(s), in particular the engaging heat pipes abut against a radial outside circumference of the electromagnetic coils or end radially outside of the electromagnetic coil.

In a preferred embodiment of a ducted fan engine, the electromotor comprises stator coils of an oval shape, in particular of a stadium shape, wherein at least one heat pipe extends into a particularly narrow arc section of one of the coils. The narrow arc section of the coils may generally correspond to a respective hot spot of the electromagnetic coil, where the highest temperature of the electromagnet may be realized during operation. Alternatively, or additionally, each electromagnetic coil is associated with a respective set of heat pipes, wherein in two heat pipes of each set extend into diametrically opposite arc sections of one of the coils.

In a preferred embodiment of a ducted fan engine, at least at least one heat pipe, in particular at least one heat pipe or at least one set of heat pipes per vane, extends into a hub of the fan stator. Preferably, the electromotor is arranged in the hub of the fan stator. In particular, the coils of the electromotor are arranged in the radially outer area of the fan stator hub. It may be preferred, that the at least one heat pipe does not extend into shroud. A radial gap between the heat pipe and the electromotor coil may be minimized. Preferably, a radially inner end of the at least one heat pipe, in particular of all heat pipes of the ducted fan engine, is arranged radially inside of the hub of the fan stator with respect to the axis of rotation of the ducted fan engine. In a further development of a ducted fan engine, the at least one heat pipe is thermally coupled to the electromotor within the hub of the fan stator. By extending the heat pipe into the hub, preferably into close proximity with a respective electromagnetic coil, particularly efficient heat transfer from the electromotor into the heat pipe maybe realized.

According to a preferred embodiment of a ducted fan engine, the electromotor comprises a multitude of stator coils associated with at least one respective heat tube, preferably several respective heat tubes, such as a respective set of heat pipes. The ducted fan engine may comprise several sets of heat pipes having the same or different numbers of individual heat pipes, each set of heat pipes being associated with one respective stator coils. A set of heat pipes may comprise at least two, preferably exactly three, four or five heat pipes. By providing at least one heat pipe or set of heat pipes for each coil of the propulsion electromotor, a uniform heat dissipation from the coils and possibly corresponding cores of the electromotor may be provided.

In an embodiment of a ducted fan engine, the heat pipe is thermally coupled to the electromotor with a thermal conductor means, in particular a solid thermal conductor means, such as a thermal paste, in particular a hardened thermal paste and/or a thermally conductive adhesive. In a further development of a ducted fan engine, the thermal conductor means thermally couples electromotor directly to the heat pipe. The thermal conductor means, in particular the solid thermal conductor means, may be arranged in the radial direction with respect to the ducted fan engine's axis of rotation. Preferably, the ducted fan engine is free of a of liquid thermal conductor means, such as oil, for transferring heat from the electromotor to the at least one heat pipe. The omission of liquid thermal conductor saves space and components.

According to yet another preferred embodiment, that may be combined with the abovementioned ones, the vanes of the ducted fan engine comprise radially extending receptions for the at least one heat pipe, wherein in particular at least one filler material, in particular a thermal grease, is arranged at the interface between each reception and the respective at least one heat pipe. It may be preferred that each stator vane is provided with a respective series of receptions configured to hold a respective set of heat pipes. The at least one reception extends radially through at least part of the vane with respect to the axis of rotation of the ducted fan engine, in particular at least half of the vane, preferably through at least 75% or at least 90% of the vane or even through the complete vane. By providing receptions for the heat pipe which extend through the majority of the stator vane, heat from the electromotor can be evenly distributed along the radial extension of the stator vane so as to use the entire stator vane as a cooling rib engaging the entire airflow through the ducted fan engine. Heat transfer efficiency may be maximized in this way. A thermal filler material between the heat pipe and the stator vane may aid heat transfer out of the heat pipe into the surrounding preferably solid material of the vane.

A ducted fan engine according to a further embodiment, which may be combined with the aforementioned ones, has a shroud with a width, in particular an inner diameter, being no larger than 500 mm, in particular in a range of 200 mm to 400 mm, more particularly in a range of 270 mm to 330 mm. In a preferred embodiment, the inner diameter of a shroud may be 300 mm. The inner diameter of the shroud is larger than the outer diameter of the rotor, allowing the rotor to be housed and rotate within the shroud. In order to optimize the use of the shroud surrounding the rotor, however, it maybe preferred that the outer (distal) diameter of the rotor blades is at least 70%, in particular at least 80%, more particularly at least 90% or 95% of the inner diameter of the shroud. Surprisingly, it was shown that ducted fan engines of a small shroud diameter are particularly suitable to maximize engine efficiency.

The invention also relates to an array of several ducted fan engines rigidly coupled to one another, in particular in an axis-parallel manner. It may be preferred that two, three or five ducted fan engines are rigidly coupled to one another, in particular with their respective rotary axes parallel to one another. Using arrays of ducted fan engines such as described above allows for a distribution of sound emission sources at the aircraft, thereby reducing noise radiation.

Another aspect of the invention relates to an aircraft, in particular a passenger aircraft, having vertical takeoff and landing capability, in particular an electronically powered vertical takeoff and landing aircraft (eVTOL), including a fuselage and at least one ducted fan engine for array of ducted fan engines as described above. The aircraft may be equipped with at least 10 or at least 20, in particular at least 30, and/or no more than 100 or no more than 50, in particular no more than 40 ducted fan engines. A preferred aircraft may comprise 36 ducted fan engines. The at least one ducted fan engine or at least one array of ducted fan engines is rotatably connected to the fuselage around a pitch axis of the aircraft. The aircraft in particular includes an engine pivotable in relation to the fuselage between a cruising flight position in which the thrust direction of the engine is aligned with the longitudinal axis of the aircraft, and a takeoff and landing position in which the thrust direction of the engine is angled towards the vertical axis of the aircraft. Engines being pivotably attached to the fuselage of the aircraft may be described as a thrust vectoring system. The aircraft can include at least one pivotable ducted fan engine in the rear of the aircraft, in particular in combination with an aileron. Particularly, the aircraft may be provided with several, in particular exactly 2, exactly 3, or exactly 4, trailing pairs of arrays of the ducted fan engines arranged in the rear of the aircraft. Alternatively or additionally, the aircraft can include at least one ducted fan engine in the front of the aircraft, in particular in the manner of, instead of, or in combination with a canard. Particularly, the aircraft may be provided with one or more, in particular exactly 1, or exactly 2, leading pairs of arrays of ducted fan engines arranged in the front of the aircraft. Alternatively or additionally, the aircraft can include at least one ducted fan engine attached to a central section of the aircraft with regard to its lengthwise extension, in particular in combination with a lift body such as a wing, winglet or canard. The aircraft can include a plurality of engines arranged side-by-side in a row transversely to the direction of flow and/or in the direction of the pitch axis.

The aircraft may include at least one primary lift body, such as a canard structure and/or a wing, which is stationarily attached to the fuselage, wherein the at least one ducted fan engine or array of ducted fan engines is attached to the primary lift body. The primary lift body may have a relatively large surface area extending in the wing span direction and the longitudinal direction of the aircraft. The primary lift body may be a statically loadbearing element for providing a lifting force during cruising flight of the aircraft in the primary cruise flight direction. It may be preferred that the primary lift body is integrally connected to the fuselage of the aircraft. In particular, the at least one ducted fan engine is arranged behind the primary lift body with regard to the cruise flight direction of the aircraft.

In particular, the aircraft is configured to be manned with at least two, preferably at least four, more preferred exactly five passengers, who may include at least one aircraft pilot. The passenger aircraft comprises a cabin for carrying one or more human passengers. In particular, the cabin for the passengers is located in the forward portion of the aircraft. The use of the ducted fan engine described herein allows to reduce or completely omit the necessity for sound absorption components which may usually surround an aircraft passenger cabin without impairing passenger comfort, rendering the aircraft lighter and thus overall more efficient.

A further aspect of the invention relates to a method for cooling an electromotor driving a propulsion ducted fan engine of an aircraft, wherein at least one heat pipe is used. Preferably, the method for cooling uses a multitude of heat pipes for cooling the electromotor. Heat pipes have demonstrated as being particularly suitable for transferring heat from a propulsion electromotor of a ducted fan engine.

In a preferred embodiment of the method, the at least one heat pipe, preferably the multitude of heat pipes, is used to transmit heat from the electromotor to vanes. In particular at least one heat pipe may be provided for each vane and/or electromotor coil, preferably the heat pipes extending radially in a spoke-like-manner from each coil to a respective vane. Preferably, each electromotor coil is provided with a respective set of heat pipes used to transfer heat from each coil to a respective vane.

In another preferred embodiment of the method that may be combined with the previous one, the heat pipe receives heat from the electromotor with in a hub of the ducted fan engine.

According to one embodiment of the method which may be combined with the previous ones, heat is transferred, in particular directly, from the electromotor to the at least one heat pipe through a thermal conductor means, in particular a solid thermal conductor means, such as a thermal paste, in particular a hardened thermal paste and/or a thermally conductive adhesive.

It may be preferred that the method for cooling an electromotor is used in a ducted fan engine as described above. A ducted fan engine or array of ducted fan engines or aircraft comprising one or more ducted fan engines may employ the above-mentioned method for cooling an electromotor.

### Brief description of the drawings/figures

Preferred configurations of the invention are described in the dependent claims. The accompanying drawings illustrate the embodiments of the present disclosure and, together with the description, further serve to explain the principles of the embodiments and to enable a person skilled in the pertinent art to make and use the embodiments.
- Fig. 1: a schematic perspective view of an eVTOL aircraft according to the invention;
- Fig. 2: a schematic sectional view of a ducted fan engine according to the invention;
- Fig. 3: a schematic perspective view of a ducted fan engine according to the invention;
- Fig. 4: a perspective view of a fan stator for a ducted fan engine according to the invention;
- Fig. 5: a front view of a fan stator for a ducted fan engine according to the invention;
- Fig. 6: a sectional view through the fan stator according to sectional line A-A of Fig. 5;
- Fig. 7: a schematic top view of a stator vane;
- Fig. 8a: a sectional view through the stator vane according to sectional line B-B of Fig. 7 in a first assembly step;
- Fig. 8b: a sectional view through the stator vane according to sectional line B-B of Fig. 7 in a second assembly step;
- Fig. 8c: a sectional view through the stator vane according to sectional line B-B of Fig. 7 in a third assembly step; and
- Fig. 8d: a sectional view through the stator vane according to sectional line B-B of Fig. 7 in a fourth assembly step.

The exemplary embodiments of the present disclosure will be described with reference to the accompanying drawings. Elements, features and components that are identical, functionally identical and have the same effect are - insofar as is not stated otherwise - respectively provided with the same reference character.

Reference numeral 100 generally designates an aircraft provided with two sets of ducted fan engines 1 arranged into a respective array 10. The aircraft 100 comprises a fuselage 103 with wings 105 attached thereto. Each wing 105 carries a respective array 10 of ducted fan engines 1. It is conceivable that each wing 105 carries two or more respective arrays of ducted fan engines 1 and/or one or more ducted fan engine 1 mounted individually pivotable to the wing 105 and/or fuselage 103. In the illustrated embodiment, the aileron 107 with the engine 1 is rotatably attached to the fuselage 103 via the wing 105. In relation to the fuselage 103, the engine 1 is pivotable around the lateral or pitch axis Y corresponding to the direction of the wing span.

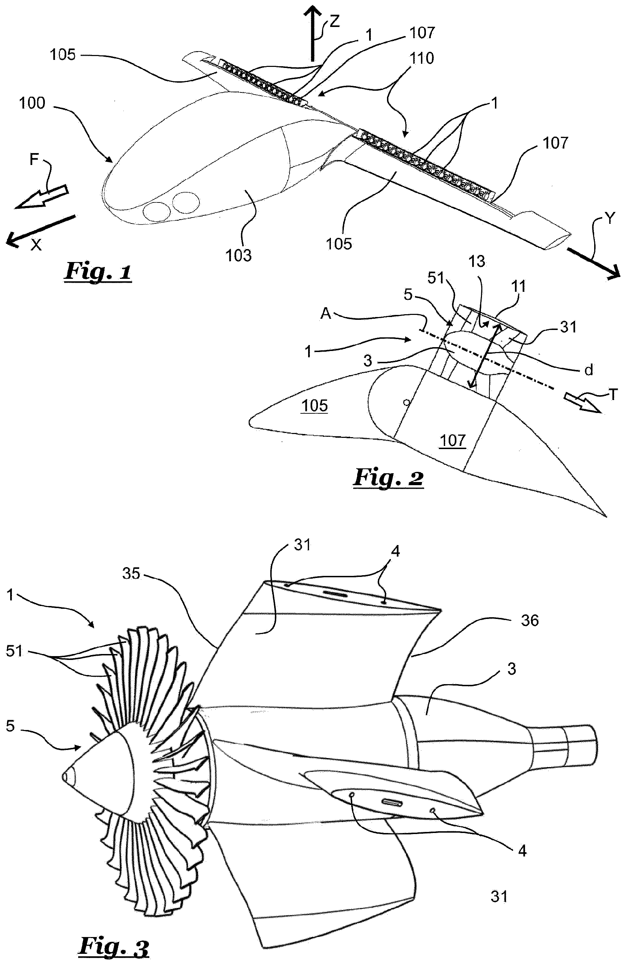

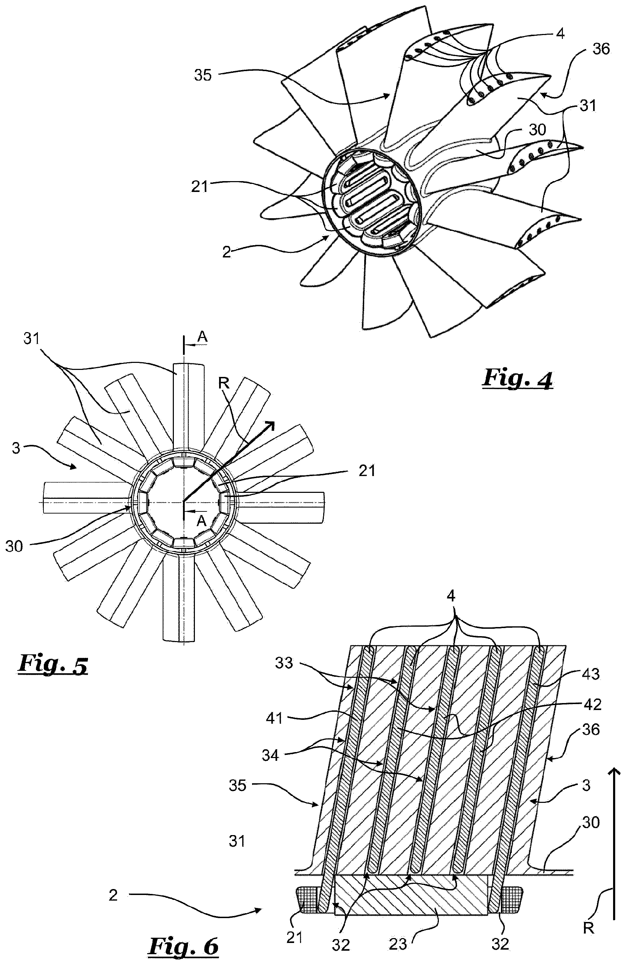

Fig. 1 shows the aircraft 100 having the array 10 arranged in a tilted position in relation to the fuselage 103. Fig. 1 shows the aileron 107 including the ducted fan engine array 110 comprising a multitude of electrically powered ducted fan engines 1 arranged in a tilted intermediate pivoting position which may correspond to a state after take-off and before cruise flight or after cruise flight and before landing, which is shown in further detail in Fig. 2. The electromotor 2 for driving the ducted fan engine 1 for propelling the aircraft 100 is described in further detail hereinbelow with regard to Figs. 4, 5 and 6.

It shall be clear that the engines 1 could be in a different position, such as a cruise flight position in which the axis A of the engines is arranged corresponding, in particular essentially parallel or parallel, to the longitudinal or roll axis X (not shown). In a cruising position, the direction of thrust T of the engine 1 is aligned with the forward cruise flight direction F. The forward cruise flight direction F may correspond to the longitudinal axis or roll axis X of the aircraft 100. Alternatively, it shall be clear that the engines 1 could be arranged in yet another position, such as a vertical take-off and/or landing or hovering position in which the axis A of the engines is arranged corresponding, in particular essentially parallel or parallel, to the vertical or yaw axis Z (not shown).

Fig. 2 shows the aileron 107 with an engine 1 in a tilted intermediate pivoting position which may correspond to a state after take-off and before cruise flight or after cruise flight and before landing. The multitude of electrically powered ducted fan engines 1 are arranged immediately adjacent one another in the direction of the pitch axis Y of the aircraft 100. In the exemplary embodiment of a passenger aircraft 100 including a cabin shown in Fig. 1, one pair of arrays 10 of multiple individual ducted fan engines is attached to the rear of the left and right wing 105. Alternatively, several pairs of arrays 10 could be attached to the wings 105, for example two, three or four pairs of arrays 10, wherein each array may be pivotable with regard to the fuselage 103 independent of the other. At least one pair of ducted fan engines or at least pair of arrays of ducted fan engines may alternatively or additionally be attached to the front of the aircraft 100, optionally as or in combination with a canard structure (not shown).

The width inner diameter d defined by an inner surface 13 of the shroud 1 of the ducted fan engine 1 surrounds the blades 51 of the rotor 5. The ducted fan engine 1 defines a rotary axis A in regard to which the shroud 11, stator 3, and rotor 5 are arranged coaxially. With regard to an airflow streaming through the engine 1 for propelling the aircraft, the rotor 5 is arranged upstream of the stator vanes 31. The shroud 11 defines an approximately cylindrical cross-section for the airflow. The diameter d of the shroud 11, in particular in the area of the rotor 51, may be less than 500 mm, in particular between 250 and 350 mm, for example 300 mm.

Several vanes 51 of a stator 5 attaching the rotor 5 to the shroud 11 are arranged downstream relative to the blades 51. The outer diameter of the rotor 5 defined by the distal ends of the rotor blades 71 is almost as large as the inner diameter d of the shroud 11. In the exemplary embodiment of a ducted fan engine 1, the single rotor 5 includes 33 rotor blades, which may all be of the same design.

Figure 2 shows a schematic perspective view of the stator 3 and rotor 5 of the ducted fan engine 1. The shroud 11 is not shown in Fig. 3 so that the other components are clearly visible. The stator 3 shown in the exemplary embodiment comprises 4 large stator vanes 31 which may alternatively be called guiding vanes or stator blades. The stator vanes 31 extend in a generally radial direction R from a stator housing 30 towards the shroud 11. The stator housing 30 may be of generally cylindrical design and contain at least one electromotor and/or transmission for driving the rotor 5 therein. The guide vanes 31 may all be of the same design. The guide vanes 31 each define a respective airfoil. The airfoil of each guide vane 31 may be essentially constant along the radial extension of the vane 31. The guide vane 31 may have a leading edge 35 and the trailing edge 36 both of which may be inclined with respect to the radial direction R at an angle between 20° and 45°, in particular approximately 30°. The stator vanes 31 attach the stator housing 30 and the rotor 5 rotatably mounted thereto to the shroud 11. The stator vanes 31 define an airfoil with a continuous inclination γ of for example approximately 15° with regard to the rotary axis A. The axial vane length measured along the stator housing 30 is substantially larger than the axial blade length measured at the rotor hub.

Figure 4 shows a perspective view of a fan stator 3 to which an electromotor 2 and several stator vanes 31 are attached. Fig. 5 shows a front view of said fan stator 3. Fig. 6 shows a sectional view through 1 stator vane 31 of the fan stator 3 according to the sectional line A - A shown in Fig. 5.

In the exemplary embodiment of a fan stator 3 illustrated in Figs. 4, 5 and 6, the ducted fan engine 1 has twelve stator vanes 31. Each stator vane 31 is provided with a respective set of heat pipes 4. In the illustrated axillary embodiment, each set comprises five such heat pipes 4. The vanes are 31 attached to the outside of a hollow cylindrical stator housing 30. Each vane is associated with the corresponding electromagnetic coil 21 of the electromotor 2. Each electromagnetic coil 21 may be provided with a hard iron core and/or laminate 23. The electromagnetic rotor of the electromotor 2 is not shown in the figures for ease of legibility. Likewise, the shroud 11 is not shown for ease of legibility.

As can be seen from Fig. 5, the stator vanes 31 and correspondingly the at least one heat pipe 4 inside of each stator vane 31 extend in a spoke-like manner in the radial direction relative to the rotary axis A of the ducted fan engine 1. The stator vanes 31 and each corresponding at least one heat pipe 4 or set of heat pipes extends in the radial direction from the outside of the stator hub's housing 30 with equal angular distances between circumferentially adjacent vanes 31 and/or pipes 4.

As can be seen in Fig. 6, each set of heat pipes 4 associated with a respective coil 21 of the electromotor 2 comprises 5 heat pipes 4, 41, 42 and 43. In the illustrated embodiment, the set of heat pipes for comprises 2 protruding heat pipes 41 which extend in the radial direction R inwardly from the stator vane 31 into the housing 30 of the hub and into the electromagnetic coil 21. As indicated for example in Fig. 4, the coils 21 each have an oval shape, in particular a stadium-shape. An electromagnetic coil 21 with an oval shape, in particular a stadium shape, has hot spots in its narrow arcs. The protruding heat pipes 41, 43 extend into these arcs. The remaining engaging heat pipes 42 extend through the stator vane 31 inside of a respective reception 33 in the stator vane 31. The engaging heat pipes 42 are connected with the radial outside of the electromotor 2, preferably with a solid thermal paste 32.

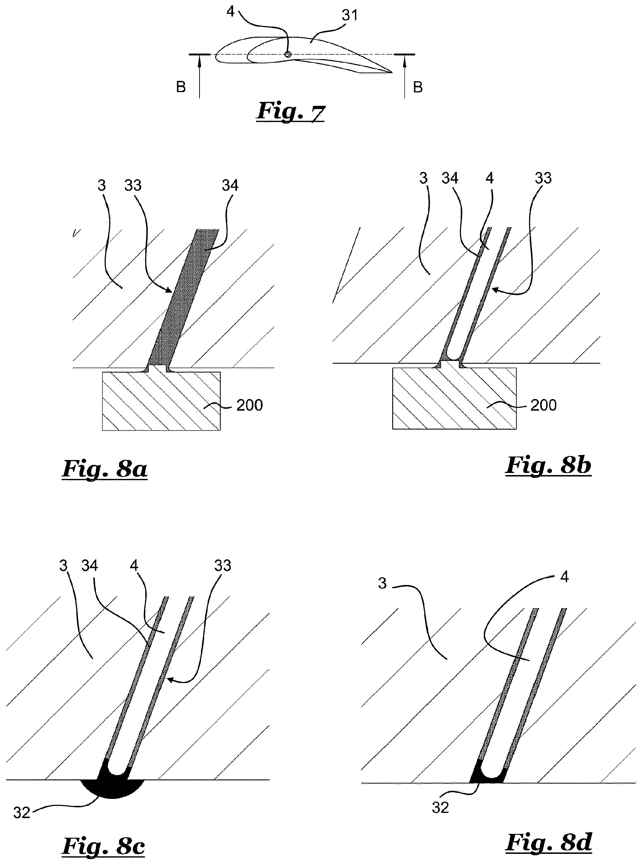

Figures 7 and 8a through 8d illustrate the assembly process for attaching one respective heat pipe 31 inside of the respective reception 33 within a stator vane 31. A top view onto the stator vane 31 is shown in Fig. 7. The stator vane 31 is first provided with one or several bores extending through the vane 31 in the radial direction, optionally with an inclination with regard to the direction of the axis A of rotation of the engine 1 which may correspond to an angle of the leading edge 35 and/or trailing edge 36 of the vane 31.

As shown in Figs. 8a and 8b, a tool 200 is arranged in the radially inward and and/or radially outward end of the reception 33. Before or after the heat pipe 4 is inserted into the reception 33, a thermal filler material, such as a thermal grease 34, is inserted into the reception 33. The tool 200 is adapted to the shape of the reception 33 such that a first section, preferably the majority, of the opening of the reception 33 is covered by the tool, preferably a nose of thereof, wherein a second section, preferably a minor section and/or annular section, of the opening of the reception remains free to allow filler material 34 to be ejected. The tool 200 thus allows the entirety of the reception 33 to be easily filled with the thermal filler material 34, leaving no air bubbles within the reception 33. It may be preferred that first, as shown in Fig. 8a, the thermal grease 34 is inserted into the reception 33 and the heat pipe 4 afterwards, as indicated in Fig. 8b. The tool 200 serves as a radial abutment to ensure the correct positioning of the heat pipe 4 in the reception 33. Superfluous thermal filler material 34 may then be removed and the tool 200 may be cleansed. Preferably, when the heat pipe 4 is arranged inside the reception 33, a preferably air-gap-free, contact interface between the pipe 4 and the inner circumference of the reception 33 is achieved through the thermal filler 34.

Thereafter, as shown in Fig. 8c, thermal paste or another preferably solidified able, thermal conductor means is connected to the radially inner end of the heat pipe 4. The thermal conductor means 34 is configured to serve the interface between the pipe 4 and the electromagnetic motor 2. For engaging heat pipes 42 which are configured to about against the outside of the electromotor 2, the thermal conductor means 34 is removed such that a plane inner surface of the stator housing 30 facing the electromotor to is obtained, preferably without any residue. A smooth and uniform inner diameter may be particularly suitable for a simple axial introduction of the electromotor 2 into the stator hub. The skilled person understands that other shapes or forms of the thermal conductor means 34 may be preferred, for example for realizing a contact interface of a protruding heat pipe 41, 43. Superfluous thermal conductor means 32 may then be removed, for example by sanding or read machining the inner diameter or other contact surface. As an alternative to thermal paste, a glue with high thermal conductivity may be used as of the thermal conductor means 32. once the thermal conductor means 32 is hardened, the hardening ensures good mechanical strength. A, preferably solidifiable, thermal conductor means may be provided at both radial ends of the heat pipe 4. The thermal conductor means 4 may be used to rigidly connect the heat pipe 4 to the vane 31.

The features disclosed in the above description, in the figures and in the claims can be of importance both individually and in any combination for the realization of the invention in its various configurations.

### Reference numbers

- 1: ducted fan engine
- 2: electromotor
- 3: fan stator
- 4: heat pipe
- 5: fan rotor
- 11: shroud
- 21: stator coils
- 23: lamination
- 30: stator housing
- 31: vane
- 32: thermal paste
- 33: reception
- 34: thermal grease
- 35: leading edge
- 36: trailing edge
- 51: rotor blade
- 100: aircraft
- 103: fuselage
- 105: wing
- 107: aileron
- 110: array

- d: width
- A: rotary axis
- F: flight direction
- T: thrust direction
- X: roll axis; longitudinal axis
- Y: pitch axis; lateral axis
- Z: yaw axis; vertical axis

## Claims

1. Ducted fan engine (1), configured for providing thrust for an aircraft (100), in particular an aircraft (100) having vertical takeoff and landing capability, comprising:
a fan stator (3) having one or more substantially radially extending vanes (31);
a shroud (11) circumferentially surrounding the fan stator (3);
a fan rotor (5) rotatably supported by the fan stator (3);
at least one electromotor (2) configured for driving the fan rotor (5), wherein in particular the electromotor is arranged within the fan stator (3); **characterized in that** at least one heat pipe (4) configured for dissipating heat from the electromotor (2) is arranged in at least one vane (31).

2. Ducted fan engine (1) according to one of the preceding claims, **characterized in that** the electromotor (2) comprises a multitude of stator coils (21) associated with at least one respective heat tube (4), preferably several respective heat tubes (4), wherein in particular the at least one heat pipe (4) extends into the electromagnetic stator.

3. Ducted fan engine (1) according to claim 2, **characterized in that** the electromotor (2) comprises stator coils (21) of an oval shape, in particular of a stadium shape, wherein at least one heat pipe (4) extends into a particularly narrow arc section of one of the stator coils (21), and/or wherein in two heat pipes (4) extent into diametrically opposite arc sections of one of the stator coils (21).

4. Ducted fan engine (1) according to one of the preceding claims, **characterized in that** at least at least one heat pipe (4) extends into a hub of the fan stator (3).

5. Ducted fan engine (1) according to claim 4, **characterized in that** the at least one heat pipe (4) is thermally coupled to the electromotor (2) within the hub of the fan stator (3).

6. Ducted fan engine (1) according to one of the preceding claims, **characterized in that** the heat pipe (4) is thermally coupled to the electromotor (2) with a thermal conductor means, in particular a solid thermal conductor means, such as a thermal paste (32), in particular a hardened thermal paste (32) and/or a thermally conductive adhesive.

7. Ducted fan engine (1) according to claim 6, **characterized in that** thermal conductor means thermally couples electromotor (2) directly to the heat pipe (4).

8. Ducted fan engine (1) according to one of the preceding claims, **characterized in that** the vanes (31) comprise radially extending receptions (33) for the at least one heat pipe (4), wherein in particular at least one filler material, in particular a thermal grease (34), is arranged at the interface between each reception (33) and the respective at least one heat pipe (4).

9. Ducted fan engine (1) according to one of the preceding claims, **characterized in that** the width (d), in particular inner diameter, of the shroud (3) is no larger than 500 mm, in particular in a range of 200 mm to 400 mm, more particularly in a range of 270 mm to 330 mm.

10. Array (10) of several, in particular two, three or five, ducted fan engines (1) according to one of the preceding claims rigidly coupled to one another, in particular in an axis-parallel manner.

11. Aircraft (100), in particular passenger aircraft, having vertical takeoff and landing capability including a fuselage (103) and at least one ducted fan engine (1) according to one of the claims 1 to 10, in particular an array according to claim 11, pivotably connected to the fuselage (103) around a pitch axis (Y) of the aircraft (100).

12. Method for cooling an electromotor (2) driving a propulsion ducted fan engine (1) of an aircraft, **characterized in that** at least one heat pipe (4) is used.

13. Method according to claim 12, **characterized in that** the heat pipe (4) is used to transmit heat from the electromotor (2) to vanes.

14. Method of claim 12 or 13, **characterized in that** the heat pipe (4) receives heat from the electromotor (2) with in a hub of the ducted fan engine (1).

15. Method of one of the claims 12 to 14, **characterized in that** heat is transferred, in particular directly, from the electromotor (2) to the at least one heat pipe (4) through a thermal conductor means, in particular a solid thermal conductor means, such as a thermal paste (32), in particular a hardened thermal paste (32) and/or a thermally conductive adhesive.
